# EUROPEAN PATENT SPECIFICATION

(11) **EP 1 985 972 B1**
(45) Date of publication and mention of the grant of the patent: **23.09.2015**
(21) Application number: 08155188.9
(22) Date of filing: 25.04.2008
(51) Int. Cl.: G01C 21/34, G01C 21/36

(54) **Route guide system and method with intersection counting unit**
Routenführungssystem und -verfahren mit Einheit zur Zählung der Abzweigungen
Système et procédé de guidage routier avec une unité pour compter le nombre d'intersections

(30) Priority: 27.04.2007 JP 2007119584
(43) Date of publication of application: 29.10.2008
(73) Proprietor: Aisin AW Co., Ltd., Fujii-cho Anjyo-shi, Aichi 444-1192 (JP)
(72) Inventor: TANIZAKI, Daisuke, Okazaki-shi Aichi 444-8564 (JP); KATO, Kiyohide, Okazaki-shi Aichi 444-8564 (JP)
(74) Representative: TBK

(56) References cited:
- JP-A- 2001 066 147
- JP-A- 2004 053 441
- US-A- 5 736 941
- US-A- 6 084 543
- US-B1- 6 253 153

## Description

### BACKGROUND OF THE INVENTION

### 1. Field of the Invention

The present invention relates to a route guide system and route guide method.

### 2. Description of the Related Art

Conventionally, in navigation devices, for example, using a global positioning system (GPS), a current position of an own vehicle, that is, a current location is detected, map data is read from a data recording unit, and a map screen is formed on a display unit. On the map screen, the location of the vehicle that indicates the current position, a neighborhood map, and the like are displayed. Accordingly, the driver can drive the vehicle according to the location of the vehicle displayed on the map screen, and the like.

If the driver inputs a destination and sets search conditions, based on the search conditions, a route search processing is performed. Then, based on the map data, a route from a departure point, which is indicated as the current location, to the destination is searched. The searched route is displayed on the map screen together with the location-of the vehicle, and guidance of the searched route, that is, route guidance is performed. According to the displayed route guidance, the driver can drive the vehicle.

In the route guidance, if it is necessary to turn the vehicle to the left or right at a certain intersection, before the vehicle arrives at the intersection, that is, a guide intersection, for example, voice is output and the route guidance is performed. Accordingly, at points before the guide intersection on the searched route, and away from the guide intersection by predetermined set distances respectively, one or more route guide points are set. When the vehicle arrives at each route guide point, predetermined guidance set for the route guide points is vocally output (for example, see Japanese Unexamined Patent Application Publication No. 2003-121185).

Furthermore, the document US 6 084 543 A discloses that when a vehicle position reaches a guidance output point, a counting unit counts the number of traffic lights existing along the guide route between the vehicle position and the related guide point with reference to the road network information. As the guidance output unit gives guidance for a related guide point using the number of traffic lights counted, a driver of the vehicle can recognize the particular guide point easily by counting the number of traffic lights.

Still further, the document JP 2001 066147 A discloses a detecting means for detecting the number of pass points that exist from a driving position to a destination on a road route searched by a route detecting means. A display or a voice outputting means outputs information to notify the user of the number of pass points existing to the destination.

Still further, the document US 6 253 153 B1 discloses counting the number of intersections to be passed before the intersection to be turned at and indicating the number relating the counted number for the vehicle operator.

### SUMMARY OF THE INVENTION

In the conventional navigation devices, at each route guide point, the route guidance about the guide intersection is performed based on the number of intersections that are provided with traffic signals, that is, intersections with traffic signals existing between the location of the vehicle and the guide intersection.

However, at a predetermined intersection, there is a case that on an oncoming lane, which is a lane oncoming cars travel, a road to enter into the intersection (hereinafter, referred to as road to enter) and a road to exit from the intersection (hereinafter, referred to as road to exit) are provided, on the other hand, on a travel lane, which is a lane the vehicle is going to travel, a road to enter and a road to exit are not provided. In such a case, depending on the navigation devices, the intersection may be recognized as an intersection with traffic signals. In this case, the driver is hard to understand the route guidance, and the driver may mistakenly recognize the guide intersection.

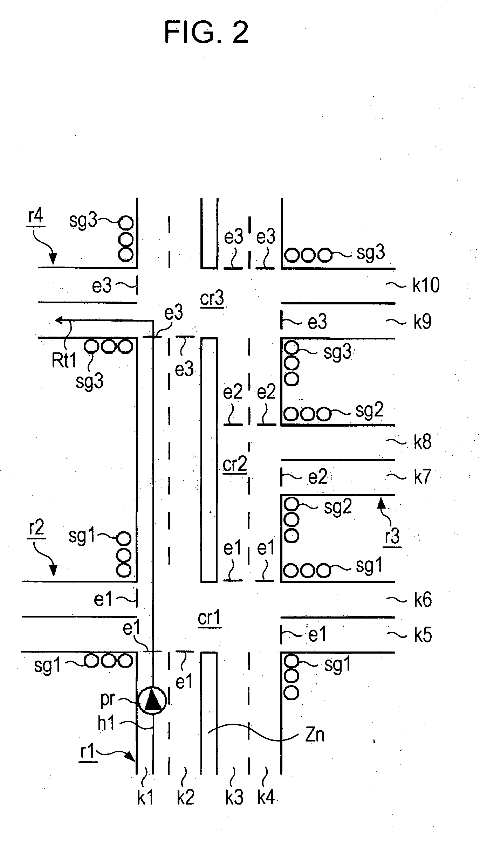

Fig. 2 is a view illustrating a route guidance in a known navigation device.

In the drawing, pr denotes a location of an own vehicle, ri (i = 1 to 4) denote roads, crj (j = 1 to 3) denote intersections where predetermined two or more roads intersect, sgj (j = 1 to 3) denote traffic signals provided at each of the intersections crj respectively, and km (m = 1 to 10) denote lanes. ej (j = 1 to 3) denote stop lines provided on predetermined lanes km at each of the intersections crj, and Zn denotes a median strip provided on a road r1. Rt1 denotes a searched route, and h1 denotes a rout guide point that is set on the searched route Rt1. On the searched route Rt1, the vehicle is to be guided to pass the road r1, and turn left at an intersection cr3, and then, the intersection cr3 is the guide intersection.

In this case, at the intersections cr1 and cr3, roads to enter and roads to exit are provided on both of the travel lane and-an oncoming lane. However, at the intersection cr2, the travel lane and the oncoming lane are divided by the median strip Zn. To the oncoming lane, a road r3 is connected and a road to enter and a road to exit are provided. On the other hand, to the travel lane, a road to enter and a road to exit are not provided.

Accordingly, if the intersection cr2 is recognized as an intersection with traffic signals by the navigation device, during the travel along the searched route Rt1, at the route guide point h1, for example, an guidance phrase "Make a left turn at the third intersection with traffic signals." or the like is vocally output. Then, the driver is hard to determine which intersection is the "the third intersection with traffic signals", and may mistakenly recognize the guide intersection.

The present invention has been made to solve the problem in the known navigation devices. An object of the present invention is to provide a route guide system and a route guide method that enable a driver to correctly recognize a guide intersection.

According to an aspect of the present invention, there is provided a route guide system according to claim 1. According to a further aspect of the present invention, there is provided a route guide method according to claim 2.

According to the present invention, based on a traffic signal and a feature on a searched route from a route guide point to a guide intersection, and the number of intersections is calculated. Based on the calculated number of the intersections, route guidance is performed. Accordingly, a driver can readily determine which intersection is the announced intersection, and can correctly recognize the guide intersection.

### BRIEF DESCRIPTION OF THE DRAWINGS

Fig. 1 is a view illustrating a navigation system according to an embodiment of the present invention;

Fig. 2 is a view illustrating a route guidance in a known navigation device;

Fig. 3 is a flowchart illustrating an operation of a guide processing unit according to the embodiment of the present invention;

Fig. 4 is a first view illustrating a rout guidance according to the embodiment of the present invention; and

Fig. 5 is a second view illustrating the rout guidance according to the embodiment of the present invention.

### DESCRIPTION OF THE PREFERRED EMBODIMENTS

Hereinafter, an embodiment of the present invention will be described in detail with reference to the attached drawings. In the embodiment, a navigation system as a route guide system is described.

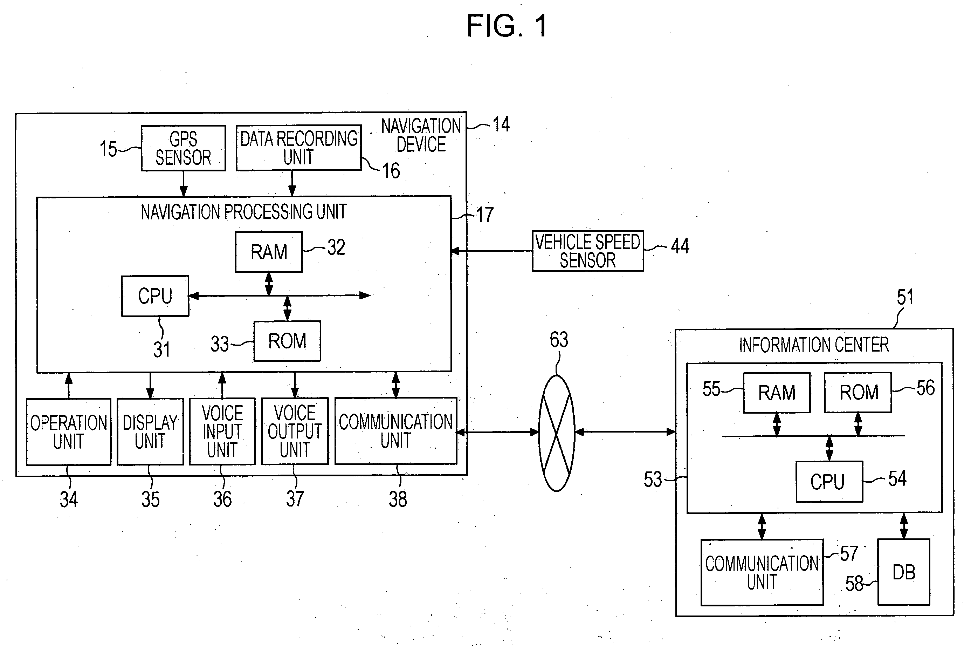

Fig. 1 is a view illustrating the navigation system according to the embodiment of the present invention.

In Fig. 1, an information terminal 14 is, for example, a navigation device as an On-Board Unit that is mounted on a vehicle. Reference numeral 63 denotes a network, and reference numeral 51 denotes an information center as an information provider. The navigation system includes the navigation device 14, the network 63, the information center 51, and the like.

The navigation system 14 includes a GPS sensor 15, a data recording unit 16, a navigation processing unit 17, an operation unit 34, a display unit 35, a voice input unit 36, a voice output unit 37, and a communication unit 38. The GPS sensor 15 functions as a current location detection unit that detects a current location of a vehicle as a location of the vehicle, and a direction of the vehicle as a vehicle direction. The data recording unit 16 functions as an information recording unit in which map data and various information is recorded, and the navigation processing unit 17 performs various calculation processings such as a navigation processing. The operation unit 34 functions as a first input unit that is operated by a driver who is an operator to perform predetermined input. The display unit 35 functions as a first output unit to perform various displays using images displayed on a screen (not shown) to notify the driver. The voice input unit 36 functions as a second input unit to perform predetermined input by a voice of the driver. The voice output unit 37 functions as a second output unit to perform a voice output to notify the driver. The communication unit 38 functions as a transmission/reception unit that functions as a communication terminal. To the navigation processing unit 17, the GPS sensor 15, the data recording unit 16, the operation unit 34, the display unit 35, the voice input unit 36, the voice output unit 37, and the communication unit 38 are connected. Further, to the navigation processing unit 17, a vehicle speed sensor 44 that functions as a vehicle speed detection unit for detecting a vehicle speed, and the like is connected. The GPS sensor 15 detects time in addition to the location and the direction of the vehicle. Further, at a predetermined point of the vehicle, in the embodiment, at a rear end of the vehicle, a camera that functions as an image pickup device is provided.

The data recording unit 16 includes a map database that has map data files. In the map data base, map data is recorded. The map data includes various data such as intersection data about intersections (branch points), node data about nodes, road data about road links, search data that is processed for search, facility data about facilities, and feature data about features on roads. The map data further includes data for outputting predetermined information by the voice output unit 37.

The features are indicators that are set or formed on roads to provide various travel information or various travel guides to drivers. The features include indication lines, road signs (paints), crosswalks, manholes, etc. The indication lines include stop lines to stop vehicles, vehicular lane borderlines that separate each lane, compartment lines that indicate parking spaces, etc. The road signs include traffic section signs that indicate traveling directions of each lane by arrows, guide signs that notify drivers of places to temporarily stop in advance such as "stop" or guide directions such as "toward **", etc. The feature data includes positional information that indicates positions of each feature using coordinates, image information that shows each feature using images, etc. The places to temporarily stop include places to enter from nonpriority roads to priority roads, crossings, intersections with flashing red traffic light, etc.

The road data about lanes include lane data that has lane numbers assigned for each lane on roads, positional information of the lanes, etc.

The data recording unit 16 further includes a statistical database that has statistical data files, a mileage history database that has mileage history data files, etc. In the statistical data files, the statistical data is recorded, and in the mileage history data files, the mileage history data is recorded as performance data.

The data recording unit 16 further includes a disc (not shown) such as a hard disc, a compact disc (CD), a Digital Versatile Disc (DVD), an optical disc, etc., to record the various data and a head (not show) such as a read/write head to read or write the various data. To the data recording unit 16, a memory card, etc. can be used. The disc, memory card, etc. form an external storage unit.

In the embodiment, the data recording unit 16 includes the map database, the statistical database, the mileage history database, etc. However, the map database, the statistical database, the mileage history database, etc. can be provided in the information center 51.

The navigation processing unit 17 includes a CPU 31, a Random Access Memory (RAM) 32, a read-only memory (ROM) 33, a flash memory (not shown), etc. The CPU 31 functions as control device that controls entire navigation device 14, and also functions as a processing unit, and the RAM 32 is used as a working memory for the CPU 31 in performing various operation processing. The ROM 33 records a program for control and various programs for performing search of routes to destinations, route guide, etc., and the flash memory object sound used to record various data, programs, etc. The RAM 32, the ROM 33, the flash memory, etc. form an internal storage unit.

As the operation unit 34, a keyboard, a mouse, and the like provided independently of the display unit 35 can be used. Further, as the operation unit 34, a touch panel configured to perform a predetermined input operation by touching or clicking image operation parts such as various keys, switches, buttons, etc. displayed by images on a screen formed on the display unit 35 can be used.

As the display unit 35, a display can be used. On various screens formed on the display unit 35, a location of the vehicle, a direction of the vehicle, etc. can be displayed. Further, on the screens, maps, searched routes, guide information and traffic information based on the maps, distances to next intersections on the searched routes, and directions to travel at the next intersections can be displayed.

The voice input unit 36 includes a microphone (not shown) and the like, and can vocally input necessary information. The voice output unit 37 includes voice synthesis device (not shown) and a speaker (not shown) to vocally output the rout guidance of the searched routes.

The communication unit 38 includes a beacon receiver, a frequency modulation (FM) receiver, etc. The beacon receiver receives various information such as traffic information and general information transmitted by a vehicle information center (not shown) such as a Vehicle Information and Communication System center® (VICS) as an information provider. The FM receiver receives FM multiplex broadcast via FM broadcast stations. The communication unit 38 can receive, in addition to the traffic information, the general information, etc. transmitted by the information center 51, the map data, the statistical data, the mileage history data, etc. via the network 63.

For the purpose, the information center 51 includes a server 53, a communication unit 57 that is connected to the server 53 and a database (DB) 58 that functions as an information recording unit, etc. The server 53 includes a CPU 54 that functions as a control device and a processing unit, a RAM 55, a ROM 56, etc. In the database 58, data similar to the various data recorded in the data recording unit 16 is recorded.

The navigation system, the navigation processing unit 17, the CPU 31, the CPU 54, the server 53, etc. can function as single computers or computers by combining two or more of the components to perform operation processing based on the various program, data, etc. The data recording unit 16, the RAMs 32 and 55, the ROMs 33 and 56, the database 58, the flash memory, etc. form a recording medium. As the processing unit, in place of the CPUs 31 and 54, a micro processing unit (MPU), etc. can be used.

Now, a basic operation of the above-described navigation system is described.

First, a driver operates the operation unit 34 to activate the navigation device 14. In response to the activation, a current location read processing unit (not shown) in the CPU 31 performs a current location read processing and reads a location and direction of an own vehicle detected by the GPS sensor 15. Then, a matching processing unit (not shown) in the CPU 31 performs a matching processing and specifies the location of the vehicle by determining that at which location in a road link the vehicle locates based on the read track of the locations of the vehicle and shapes and arrangements of each road link that form roads around the vehicle.

In the embodiment, the matching unit further can specify the location of the vehicle based on a location of a feature that is an object shot by the camera.

For the purpose, an image recognition processing unit (not shown) in the CPU 31 performs an image recognition processing. In the processing, the image recognition processing unit reads the image data from the camera and recognizes the feature in the image that consists of the image data. Further, a distance calculation processing unit (not shown) in the CPU 31 performs a distance calculation processing and calculates a distance from the camera to the actual feature based on the location of the feature in the image. An own vehicle location specification processing unit in the matching processing unit performs an own vehicle specification processing. In the processing, the own vehicle location specification processing unit reads the distance, reads the feature data from the data recording unit 16, acquires coordinates of the feature, and specifies the location of the vehicle based on the coordinates and the distance.

A travel lane specification unit (not shown) in the CPU 31 performs a travel lane specification processing. In the processing, the travel lane specification unit specifies the location of the vehicle, similarly, by matching the feature that is recognized based on the image data, the feature data read from the data recording unit 16, and lane data. Based on the specified location of the vehicle, a travel lane on which the vehicle is traveling is specified.

The travel lane specification unit can read a sensor output of a geomagnetic sensor (not shown). Based on the sensor output, the travel lane specification unit can determine whether an object to be detected formed of a ferromagnetic material such as a manhole exists or not on a predetermined lane on a road. Based on the determination result, the travel lane specification unit can determine the travel lane. Further, the travel lane specification unit can use a high-precision GPS sensor to precisely detect the location of the vehicle, and based on the detection result, detect the travel lane. Further, if necessary, the travel lane specification unit can specify the travel lane by combining the sensor output from the geomagnetic sensor, the location of the vehicle, and the like while performing an image processing on image data of an indication line.

A basic information acquisition processing unit (not shown) in the CPU 31 performs a basic information acquisition processing. In the processing, the basic information acquisition processing unit reads and acquires the map data from the data recording unit 16, or receives and acquires the map data from the information center 51 or the like via the communication unit 38. In the case where the map data is acquired from the information center 51 or the like, the basic information acquisition processing unit downloads the received map data in the flash memory.

A display processing unit (not shown) in the CPU 31 performs a display processing and forms various screens on the display unit 35. For example, a map display processing unit in the display processing unit performs a map display processing, forms a map screen on the display unit 35, displays the location and direction of the vehicle on the map screen, and displays a neighbor map around the location of the vehicle.

Accordingly, the driver can drive the vehicle based on the location and direction of the vehicle and neighbor map.

In response to the driver's operation to input a destination using the operation unit 34, a destination setting processing unit (not shown) in the CPU 31 performs a destination setting processing and sets the destination. If necessary, it is possible to input and set a departure place. It is also possible to register a predetermined place in advance and set the registered place as a destination.

Then, in response to the driver's operation to input a search condition using the operation unit 34, a search condition setting processing unit (not shown) in the CPU 31 performs a search condition setting processing and sets the search condition.

In response to the setting of the destination and the search condition, a route search processing unit (not shown) in the CPU 31 performs a route search processing, and reads the location of the vehicle, the destination, the search condition, etc. Then, the route search processing unit reads search data, etc. from the data recording unit 16, and based on the location of the vehicle, the destination, and the search data, searches for a route from the departure place indicated as the location of the vehicle to the destination with the search condition and outputs route data for the searched routes. In the searched routes, a route that has a minimum total cost of links allotted to each road link is selected as the searched route.

Further, it is possible to perform the route search processing in the information center 51. In this case, the CPU 31 transmits the location of the vehicle, the destination, the search condition, etc. to the information center 51 via the network 63. In response to the reception of the location of the vehicle, the destination, the search condition, etc. in the information center 51, a route search processing unit (not shown) in the CPU 54 performs a route search processing similar to that in the CPU 31, and reads search data, etc. from the database 58. Then, based on the location of the vehicle, the destination, and the route data, the route search processing unit searches for a route from the departure place to the destination with the search condition and outputs route data showing the searched route. Then, a transmission processing unit (not shown) in the CPU 54 performs a transmission processing and transmits the route data to the navigation device 14 via the network 63.

A guide processing unit (not shown) in the CPU 31 performs a guide processing and performs route guidance. For the purpose, a guide display processing unit in the guide processing unit performs a route display processing, reads the route data, and based on the route data, displays the searched route on the map screen.

In the route guidance, in a case where it is necessary to turn the vehicle to the left or right at a predetermined intersection on the searched route, the intersection is set as a guide intersection, and route guidance for turning the vehicle to the left or right at the guide intersection is performed. Further, on toll roads for vehicles such as an expressway, an urban expressway, a toll road, etc., an intersection to merge into or branch from a junction, etc. can be set as the guide intersection. Further, in a case where the vehicle passes through a predetermined facility on the searched route, for example, a grade crossing, the grade crossing can be set as a guide facility, and route guidance for temporarily stop the vehicle at the guide facility can be performed.

For the purpose, a guide point setting processing unit in the guide processing unit performs a guide point setting processing and based on route data, sets the guide intersection, the guide facility, etc. The guide intersection, the guide facility, etc. constitute guide points.

A route guide point setting processing unit in the guide processing unit performs a route guide point setting processing. In the processing, at points before the guide intersection on the searched route, the guide facility, etc. and the points that are apart by predetermined distances respectively, one or more, in the embodiment, a plurality of route guide points are set. If the vehicle arrives at each route guide point, a voice output processing unit in the guide processing unit performs a voice output processing, and performs voice outputs with guidance phrases of contents set in advance for each guide points about the guide intersection, the guide facility, etc., respectively.

For the purpose, the guidance phrases are set for each distance from the route guide point to the guide intersection, the guide facility, etc., and the guidance phrases are recorded as a guidance phrase map in the data recording unit 16. A point arrival determination processing unit in the guide processing unit performs a point arrival determination processing. In the processing, the point arrival determination processing unit reads the locations of the guide intersection, the guide facility, etc. and the location of the vehicle, calculates distances from the location of the vehicle to the guide intersection, the guide facility, etc., and determines whether the vehicle approaches to the guide intersection, the guide facility, etc., and arrives at a predetermined route guide point. If the vehicle has arrived at the predetermined route guide point, the voice output processing unit refers to the guidance phrase map, reads a guidance phrase corresponding to each distance, and performs a voice output.

A guide intersection enlarged view formation processing unit in the guide processing unit performs a guide intersection enlarged view formation processing. In the processing, the guide intersection enlarged view formation processing unit forms an enlarged view of the guide intersection, that is, an intersection enlarged view as a guide point enlarged view, at a predetermined area in the map screen before the vehicle arrives at the guide intersection, and performs a route guidance based on the intersection enlarged view. For the purpose, if the vehicle arrives at the point before (the side of the location of the vehicle) the guide intersection on the searched route and apart by the set distance, the intersection enlarged view is displayed. In this case, on the intersection enlarged view, a neighbor map of the guide intersection, the searched route, facilities that are landmarks at the guide intersection, etc., are displayed.

Further, in a case where a route that has a plurality of lanes is included in the searched route, the guide processing unit performs a lane guidance. For the purpose, a recommended lane calculation processing unit (not shown) in the CPU 31 performs a recommended lane calculation processing. In the processing, the recommended lane calculation processing unit reads the searched route, reads intersection data, lane data, etc. Based on the searched route, intersection data, the lane data, etc., the recommended lane calculation processing unit calculates recommended lanes on each road and acquires lane numbers.

Then, a lane display processing unit in the guide processing mans performs a lane display processing. In the processing, the lane display processing unit forms a lane guide map at a predetermined area in the map screen, displays each lane on the route on the lane guide map, displays the recommended lanes, and guide the vehicle from the travel lane to the recommended lane.

As described above, for example, if the route guide points are set before the guide intersection and the vehicle arrives at the route guide points, the route guidance about the guide intersection by the voice output is performed.

In this case, at each route guide points, in performing the route guidance based on the number of the intersections with traffic signals existing between the location of the vehicle and the guide intersection, if a branch road r3 exists on an oncoming lane and a road to enter and a road to exit exist, but a branch road does not exist on the travel lane and a road to enter and a road to exit are not provided, the intersection that does not have the road to enter and the road to exit is considered as an intersection having traffic signals. Then, if the number of the intersections is calculated, the route guidance is hard to understand for the driver, and the driver may mistakenly recognize the guide intersection.

Accordingly, in the embodiment, in calculating the number of the intersections with traffic signals existing from the location of the vehicle to the guide intersection, in addition to the intersection data, feature data is used.

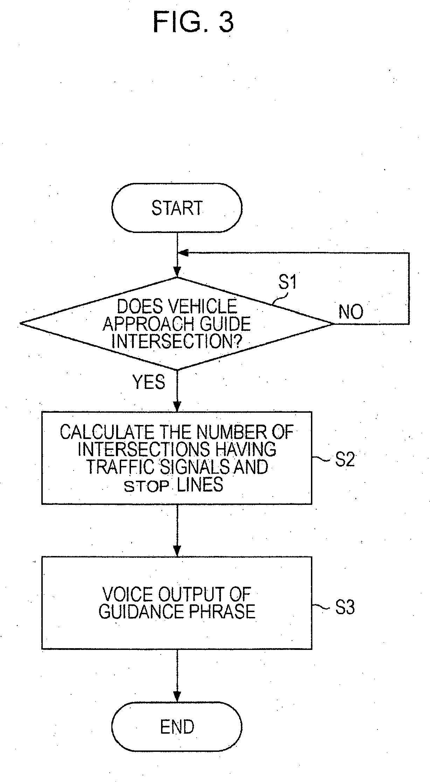

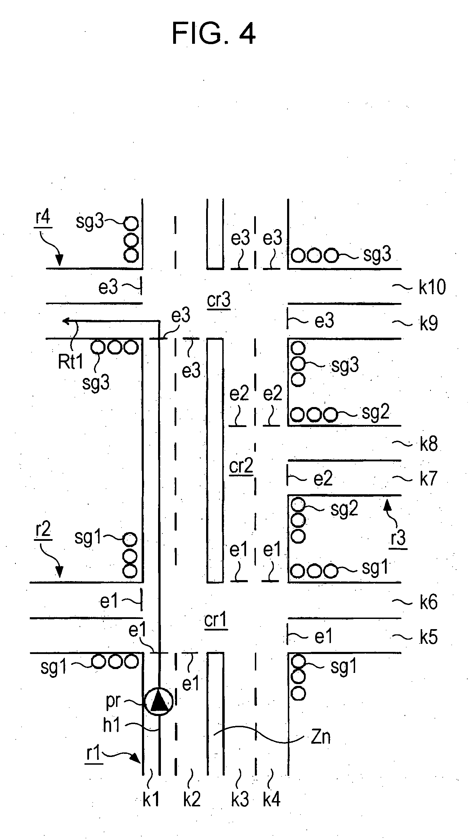

Fig. 3 is a flowchart illustrating an operation of the guide processing unit according to the embodiment of the present invention. Fig. 4 is a first view illustrating a route guidance according to the embodiment of the present invention.

In Fig. 4, pr denotes a location of an own vehicle, ri (i = 1 to 4) denote roads, crj (j = 1 to 3) denote intersections where predetermined two or more roads intersect, and sgj (j = 1 to 3) denote traffic signals provided at each of the intersections crj. km (m = 1 to 10) denote lanes, ej (j = 1 to 3) denote stop lines formed on the predetermined lanes km at each of the intersections crj, and Zn denotes a median strip provided on a road r1. Rt1 denotes a searched route, and h1 denotes a rout guide point that is set on the searched route Rt1. On the searched route Rt1, the vehicle is to be guided to pass the road r1, and turn left at an intersection cr3, and then, the intersection cr3 is the guide intersection.

In this case, at the intersections cr1 and cr3, there are roads to enter and roads to exit on both of the travel lane and the oncoming lane. That is, if the vehicle travels on the lane k1 or k2, at the intersection cr1, the road r1 is the road to enter, and the road r2 is the road to exit. At the intersection cr3, the road r1 is the road to enter, and the road r4 is the road to exit. If the vehicle travels on the lane k3 or k4, at the intersection cr3, the road r1 is the road to enter, and the road r4 is the road to exit. At the intersection cr1, the road r1 is the road to enter, and the road r2 is the road to exit. Accordingly, at the intersections cr1 and cr3, on both of the travel lane and the oncoming lane, the stop lines e1 and e3 exist before the inter sections cr1 and cr3.

On the other hand, at the intersection cr2, the travel lane and the oncoming lane are divided by the median strip. To the oncoming lane, the road r3 is connected and there are a road to enter and a road to exit. However, on the travel lane, a road to enter and a road to exit do not exist. That is, if the vehicle travels on the lane k1 or k2, at the intersection cr2, the vehicle can travel only in a straight direction. On the other hand, if the vehicle travels on the lane k3 or k4, at the intersection cr2, the road r1 is the road to enter and the road r3 is the road to exit. Accordingly, at the intersection cr2, a stop line is not provided before the intersection cr2 on the travel lane, and the stop line e2 exists before the intersection cr2 on the oncoming lane.

As described above, on the searched route Rt1, at the intersection that has the road to enter and the road to exit, the stop line exist. However, at the intersection that does not have the road to enter and the road to exit, a stop line is not provided.

Now, an operation of the guide processing unit in a case to drive a vehicle along the searched route Rt1 is described.

First, the point arrival determination unit in the guide processing unit performs a point arrival determination processing. In the processing, the point arrival determination unit reads a location of a guide intersection and a location of an own vehicle pr, calculates a distance from the location of the vehicle pr to the location of the guide intersection, and determines whether the vehicle approaches to the guide intersection and arrives at a predetermined route guide point h1. If the vehicle arrives at the predetermined route guide point h1, an intersection counting unit in the guide processing unit performs an intersection counting processing. In the processing, the intersection counting processing unit reads intersection data and feature data, and calculates the number of intersections that has the traffic signals sgj and the stop lines ej out of the intersections crj from the route guide point h1 to the guide intersection as the number of intersections with traffic signals.

For the purpose, the intersection counting processing unit sequentially determines whether there exist traffic signals with respect to each of the intersections cr1 to cr3 on the searched route Rt1. If there are the traffic signals, it is determined whether there exist stop lines ej on the road to enter before the intersections crj on the travel lane. If, on the travel lane, there are the stop lines ej on the road to enter before the intersections crj, the number of the intersections is calculated.

In the example shown in Fig. 4, at all of the intersections cr1 to cr3 in the intersections crj from the route guide point h1 to the guide intersection, there are the traffic signals sg1 to sg 3 respectively. However, on the travel lane (the side of the lanes k1 and k2), there are the stop lines e1 and e3 on the road to enter before the intersections cr1 and cr3, but there is not a road to enter before the intersection cr2 and also there is not a stop line.

Accordingly, the number of the intersections cr1 and cr3 is counted, the number of the intersection cr2 is not counted, and the total number of the intersections with the traffic signals sgj and the stop lines ej is two.

The voice output processing unit reads the number of the intersections, refers to the guidance phrase map, and reads the guidance phrases corresponding to the number of the intersections and distances. Then, the voice output processing unit performs voice outputs of guidance phrases "Make a left turn at the second traffic signal." or the like.

Using the route guidance by the voice outputs, the driver drives the vehicle according to the route guidance from the location of the vehicle pr to the guide intersection along the searched route Rt1.

As described above, in the embodiment, based on the traffic signals sgj and features on the searched route Rt1 from the route guide point h1 to the guide intersection, in the embodiment, based on the stop lines ej, the number of the intersections is calculated. Based on the calculated number of the intersections, the route guidance is performed. Accordingly, the driver can readily determine which intersection is the intersection announced by the guidance phrase, and can correctly recognize the guide intersection.

Meanwhile, in the embodiment, the number of the intersections crj is calculated based on the intersection data and the feature data. However, if the vehicle is actually driven along the searched route Rt1, a new traffic signal may be installed at a predetermined intersection crj and a new stop line may be provided. In this case, when the vehicle passes through the intersection, the stop line is shot by the camera. Then, the image recognition processing unit reads the image data from the camera, and recognizes the stop line in the image that is consists of the image data. A notification processing unit (not shown) in the CPU 31 (Fig. 1) performs a notification processing and notifies the driver that the traffic signal is newly installed and the stop line is provided. Accordingly, the driver can correctly recognize the guide intersection.

Further, a data update processing unit (not shown) in the CPU 31 performs a data update processing. In the processing, the data update processing unit adds the data of the newly installed traffic signal to the intersection data, adds the data of the newly provided stop line to the feature data, and updates the data.

Now, a flowchart is described. In step S1, it is waited for an own vehicle to approach to a guide intersection. When the vehicle approaches to the guide intersection, the process proceeds to step S2. In step S2, the number of the intersections crj with the traffic signals sgj and the stop lines ej is calculated. In step S3, voice outputs of voice phrases are performed and the process is ended.

Meanwhile, two or more intersections may be integrated because of a certain reason that the intersections are close to each other and an integrated intersection may be formed. The integrated intersection is recorded in the date recording unit 16 as one intersection, and in the route search processing and the guide processing, considered as one intersection.

Now, a navigation system in a case where intersections that form an integrated intersection exist on the searched route Rt1 is described.

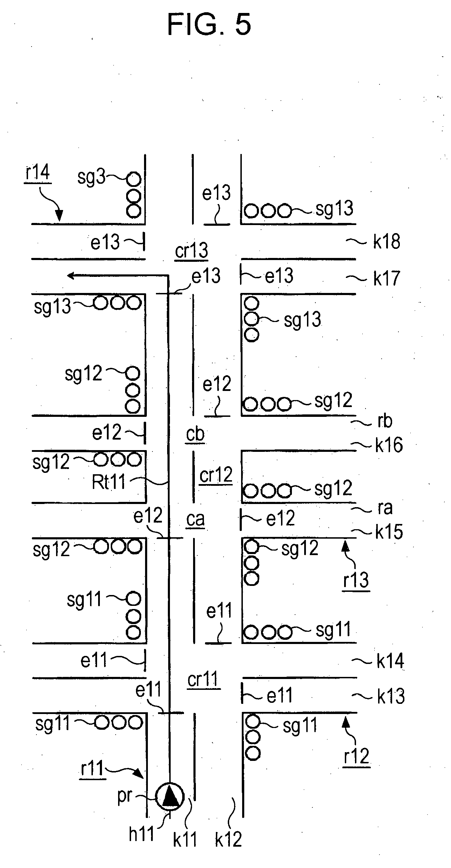

Fig. 5 is a second view illustrating the route guidance according to the embodiment of the present invention.

In Fig. 5, pr denotes a location of an own vehicle, ri (i = 11 to 14) denote roads, crj (j = 11 to 13) denote intersections where predetermined two or more roads intersect, and sgj (j = 11 to 13) denote traffic signals provided at each of the intersections crj. km (m = 11 to 18) denote lanes, ej (j = 11 to 13) denote stop lines formed on predetermined lanes km at the intersections crj. Rt11 denotes a searched route, and h11 denotes a rout guide point that is set on the searched route Rt11. On the searched route Rt11, the vehicle is to be guided to pass the road r11, and turn left at an intersection cr13, and then, the intersection cr13 is the guide intersection.

The route r13 is formed of two roads ra and rb provided in parallel. In this case, the road ra and rb may be one-way roads or two-way roads. In the embodiment, the road ra and rb are one-way roads. The intersection cr12 is an integrated intersection. The intersection cr12 is continuing on the r11, and includes two intersections ca and cb that are closely provided. Further, at the intersection ca, the roads r11 and road ra are intersect with each other, and at the intersection cb, the roads r11 and the road rb are intersect with each other.

At the intersection cr12, the traffic signals sg 12 are provided at each of the intersections ca and cb. However, the intersections ca and cb are considered as one intersection cr2.

Accordingly, at the intersection cr2, there is the stop line e12 before the intersection ca on the travel lane, but there is not a stop line before the intersection cb on the travel lane. Further, there is the stop line e12 before the intersection cb on the oncoming lane, but there is not a stop line before the intersection ca on the oncoming lane.

Now, an operation of the guide processing unit in a case where a vehicle is driven along the searched route Rt11 is described.

First, the point arrival determination unit reads a location of a guide intersection and a location of an own vehicle pr, calculates a distance from the location of the vehicle pr to the location of the guide intersection, and determines whether the vehicle approaches to the guide intersection and arrives at a predetermined route guide point h11. If the vehicle arrives at the predetermined route guide point h11, the intersection counting reads the intersection data and the feature data, and calculates the number of intersections that has the traffic signals sgj and the stop lines ej out of the intersections crj from the route guide point h11 to the guide intersection.

For the purpose, the intersection counting processing unit sequentially determines whether there exist traffic signals with respect to each of the intersections cr11 to crl3 on the searched route Rt11. If there are the traffic signals, it is determined whether there exist stop lines ej on the road to enter before the intersections crj on the travel lane. If, on the travel lane, there are the stop lines ej on the road to enter before the intersections crj, the number of the intersections is calculated.

In the example shown in Fig. 5, at all of the intersections cr11 to cr13 in the intersections crj from the route guide point h11 to the guide intersection, there are the traffic signals sg11 to sg 13 respectively. On the travel lane (the side of the lanes k11 and k12), there are the stop lines e11 and e13 on the road to enter before the intersections cr11 and cr13. However, at the intersection cr12, there is the stop line e12 before the intersection ca but there is not a stop line before the intersection cb.

Accordingly, the number of the intersections cr11 and cr13 is counted, and with respect to the intersection cr12, the only one intersection ca is counted and the intersection cb is not counted. Accordingly, the total number of the intersections with the traffic signals sgj and the stop lines ej is three.

Then, the voice output processing unit reads the number of the intersections, refers to the guidance phrase map, and reads the guidance phrases corresponding to the number of the intersections and the distances. Then, the voice output processing unit performs voice outputs of guidance phrases "Make a left turn at the third traffic signal." or the like based on the number of the intersections.

As described above, in the embodiment, based on the number of the intersections with the traffic signals sgj and the stop lines ej, the route guidance is performed. Accordingly, the driver can readily determine which intersection is "the third intersection with the traffic signals", and can correctly recognize the guide intersection.

## Claims

1. A route guide system comprising:
a map data base storing map data including intersection data and indicator data;
a current location detection unit (15) suitable for detecting a current position of an own vehicle as a location of the vehicle;
a route search processing unit suitable for searching for a route (**Rt1**) to a destination based on the location of the vehicle;
a route guide point setting processing unit suitable for setting a route guide point at a predetermined point on the searched route (**Rt1**) before a guide intersection;
an intersection counting processing unit adapted:
to read the intersection data and the indicator data from the map data base; and
to sequentially determine based on the intersection data whether there exist traffic signals (**sg1 to sg3**) with respect to each intersection (**cr1 to cr3**) from the route guide point to the guide intersection on the searched route; **characterized in that**; the intersection counting processing unit is further adapted,
if there is a traffic signals with respect to an intersection, to determine based on the indicator data whether there exists an indicator on the road to enter before the intersection on a travel lane (**k1 to k10**) that is a lane the vehicle is going to travel, the indicator being set or formed on the road; and
to calculate the number of intersections (**cr1 to cr3**) for which it has been determined that there exist a traffic signal and an indicator; and
the route guide system further comprises a voice output processing unit (**37**) suitable for performing a voice output based on the calculated number of the intersections when the vehicle arrives at the route guide point.

2. A route guide method comprising:
storing map data including intersection data and indicator data in a map data base;
detecting a current position of an own vehicle as a location of the vehicle;
searching for a route to a destination based on the location of the vehicle;
setting a route guide point at a predetermined point on the searched route before a guide intersection;
reading the intersection data and the indicator data from the map data base, and
sequentially determining based on the intersection data whether there exist traffic signals (**sg1 to sg3**) with respect to each intersection (**cr1 to cr3**) from the route guide point to the guide intersection on the searched route,
**characterized in** the method further comprises:
if there is a traffic signal with respect to an intersection, determining based on the indicator data whether there exists an indicator on the road to enter before the intersection on a travel lane (**k1 to k10**) that is a lane the vehicle is going to travel, the indicator being set or formed on the road,
calculating (**S2**) the number of intersections for which it has been determined that there exist a traffic signal and an indicator; and
performing (**S3**) a voice output based on the number of the calculated intersections when the vehicle arrives at the route guide point.

## Patentansprüche

1. Routenführungssystem, mit:
einer Kartendatenbank, die Kartendaten mit Kreuzungsdaten und Indikatorendaten speichert;
einer Erfassungseinheit einer gegenwärtigen Position (**15**), die zum Erfassen einer gegenwärtigen Position eines eigenen Fahrzeugs als eine Position des Fahrzeugs geeignet ist;
einer Routensuchverarbeitungseinheit, die zum Suchen nach einer Route (**Rt1**) zu einem Ziel basierend auf der Position des Fahrzeugs geeignet ist;
einer Routenführungspunkteinstellverarbeitungseinheit, die zum Einstellen eines Routenführungspunkts an einem vorbestimmten Punkt auf der gesuchten Route (**Rt1**) vor einer Führungskreuzung geeignet ist;
einer Kreuzungszählverarbeitungseinheit, die eingerichtet ist:
um die Kreuzungsdaten und die Indikatorendaten aus der Kartendatenbank auszulesen; und
um sequenziell basierend auf den Kreuzungsdaten zu bestimmen, ob Verkehrssignale (**sg1 bis sg3**) bezüglich jeder Kreuzung (**cr1 bis cr3**) von dem Routenführungspunkt zu der Führungskreuzung auf der gesuchten Route vorhanden sind;
**dadurch gekennzeichnet, dass**
wenn ein Verkehrssignal bezüglich einer Kreuzung vorliegt, um basierend auf den Indikatorendaten zu bestimmen, ob ein Indikator über die einzufahrende Straße vor der Kreuzung auf einer Fahrspur (**k1 bis k10**), die eine Spur ist, auf der das Fahrzeug fahren wird, vorhanden ist, wobei der Indikator auf der Straße eingestellt oder ausgebildet ist; und
um die Anzahl von Kreuzungen (**cr1 bis cr3**), für die bestimmt wurde, dass ein Verkehrssignal und ein Indikator vorhanden sind, zu berechnen; und
das Routenführungssystem weiterhin eine Sprachausgabeverarbeitungseinheit (**37**) aufweist, die zum Durchführen einer Sprachausgabe basierend auf der berechneten Anzahl der Kreuzungen, wenn das Fahrzeug den Routenführungspunkt erreicht, geeignet ist.

2. Routenführungsverfahren, mit:
Speichern von Kartendaten mit Kreuzungsdaten und Indikatorendaten in einer Kartendatenbank;
Erfassen einer gegenwärtigen Position eines eigenen Fahrzeugs als eine Position des Fahrzeugs;
Suchen nach einer Route (**Rt1**) zu einem Ziel basierend auf der Position des Fahrzeugs;
Einstellen eines Routenführungspunkts an einem vorbestimmten Punkt auf der gesuchten Route vor einer Führungskreuzung;
Auslesen der Kreuzungsdaten und der Indikatorendaten aus der Kartendatenbank; und
sequenzielles Bestimmen, basierend auf den Kreuzungsdaten, ob Verkehrssignale (**sg1 bis sg3**) bezüglich jeder Kreuzung (**cr1 bis cr3**) von dem Routenführungspunkt zu der Führungskreuzung auf der gesuchten Route vorhanden sind;
**dadurch gekennzeichnet, dass** das Verfahren weiterhin aufweist:
wenn ein Verkehrssignal bezüglich einer Kreuzung vorliegt, Bestimmen, basierend auf den Indikatorendaten, ob ein Indikator über die einzufahrende Straße vor der Kreuzung auf einer Fahrspur (**k1 bis k10**), die eine Spur ist, auf der das Fahrzeug fahren wird, vorhanden ist, wobei der Indikator auf der Straße eingestellt oder ausgebildet ist;
Berechnen (**S2**) der Anzahl von Kreuzungen, für die bestimmt wurde, dass ein Verkehrssignal und ein Indikator vorhanden sind; und
Durchführen (**S3**) einer Sprachausgabe basierend auf der Anzahl der berechneten Kreuzungen, wenn das Fahrzeug den Routenführungspunkt erreicht.

## Revendications

1. Système de guidage routier comportant :
une base de données de carte stockant des données de carte comprenant des données d'intersection et des données d'indicateur ;
une unité de détection de localisation courante (15) appropriée pour détecter une position courante d'un véhicule particulier comme localisation du véhicule ;
une unité de traitement de recherche d'itinéraire appropriée pour rechercher un itinéraire (Rtl) vers une destination sur la base de la localisation du véhicule ;
une unité de traitement d'établissement de point de guidage routier appropriée pour établir un point de guidage routier en un point prédéterminé sur l'itinéraire recherché (Rtl) avant une intersection de guidage ;
une unité de traitement de comptage d'intersection prévue :
pour lire les données d'intersection et les données d'indicateur dans la base de données de carte ; et
pour déterminer de manière séquentielle sur la base des données d'intersection s'il existe des feux de signalisation (sg1 à sg3) par rapport à chaque intersection (cr1 à cr3) depuis le point de guidage routier jusqu'à l'intersection de guidage sur l'itinéraire recherché ; **caractérisé en ce que** l'unité de traitement de comptage d'intersection est en outre prévue,
s'il y a des feux de signalisation par rapport à une intersection, pour déterminer sur la base des données d'indicateur s'il existe un indicateur sur la route sur laquelle il faut entrer avant l'intersection sur une voie de circulation (k1 à k10) qui est une voie sur laquelle le véhicule va se déplacer, l'indicateur étant prévu ou formé sur la route ; et
pour calculer le nombre d'intersections (cr1 à cr3) pour lesquelles on a déterminé qu'il existe des feux de signalisation et un indicateur ; et
le système de guidage routier comporte en outre une unité de traitement de sortie vocale (37) appropriée pour réaliser une sortie vocale sur la base du nombre calculé d'intersections quand le véhicule arrive au niveau du point de guidage routier.

2. Procédé de guidage routier comportant le fait de :
stocker des données de carte comprenant des données d'intersection et des données d'indicateur dans une base de données de carte ;
détecter une position courante d'un véhicule particulier comme localisation du véhicule ;
rechercher un itinéraire vers une destination sur la base de la localisation du véhicule ;
établir un point de guidage routier en un point prédéterminé sur l'itinéraire recherché avant une intersection de guidage ;
lire les données d'intersection et les données d'indicateur dans la base de données de carte, et
déterminer de manière séquentielle sur la base des données d'intersection s'il existe des feux de signalisation (sg1 à sg3) par rapport à chaque intersection (cr1 à cr3) depuis le point de guidage routier jusqu'à l'intersection de guidage sur l'itinéraire recherché, **caractérisé en ce que** le procédé comporte en outre le fait de :
s'il y a des feux de signalisation par rapport à une intersection, déterminer sur la base des données d'indicateur s'il existe un indicateur sur la route sur laquelle il faut entrer avant l'intersection sur une voie de déplacement (k1 à k10) qui est une voie sur laquelle le véhicule va se déplacer, l'indicateur étant prévu ou formé sur la route,
calculer (S2) le nombre d'intersections pour lesquelles on a déterminé qu'il existe des feux de signalisation et un indicateur ; et
réaliser (S3) une sortie vocale sur la base du nombre d'intersections calculées quand le véhicule arrive au niveau du point de guidage routier.
